# EUROPEAN PATENT SPECIFICATION

(11) **EP 0 744 636 B1**
(45) Date of publication and mention of the grant of the patent: **23.02.2000**
(21) Application number: 96303407.9
(22) Date of filing: 14.05.1996
(51) Int. Cl.: G02B 6/10, G02B 6/16, C03B 37/02, C03B 37/027, C03B 37/03

(54) **Method of making optical fiber with low polarization mode dispersion**
Verfahren zur Herstellung optischer Faser mit geringer Polarisationsdispersion
Méthode de fabrication des fibres optiques à faible dispersion de polarisation

(30) Priority: 24.05.1995 US 449455
(43) Date of publication of application: 27.11.1996
(73) Proprietor: AT&T IPM Corp., Coral Gables, Florida 33134 (US)
(72) Inventor: DiMarcello, Frank Vincent, Annandale, New Jersey 08801 (US); Huff, Richard Garner, Basking Ridge, New Jersey 07920 (US); Hart, Arthur Clifford, Jr., Chester, New Jersey 07930 (US); Kranz, Karen S., Middlesex, New Jersey 08846 (US); Walker, Kenneth Lee, New Providence, New Jersey 07974 (US)
(74) Representative: Johnston, Kenneth Graham

(56) References cited:
- EP-A- 0 582 405
- EP-A- 0 729 919
- WO-A-97/07067

## Description

### Background of the Invention

It is well known to those skilled in the art that "single mode" optical fiber actually supports two modes that differ in polarization, and that in typical single mode fiber the two modes can propagate with slightly different phase velocities, resulting in (generally undesirable) polarization mode dispersion (PMD).

US patent 5,298,047 discloses an advantageous method of making single mode fiber having low PMD. The method involves applying a torque to the fiber as the fiber is being drawn from the preform, with the applied torque typically alternating in sense, i.e., causing alternately clockwise and counterclockwise twist of the fiber around the axis of the fiber. The fiber transmits the alternating twists to the hot zone wherein the glass of the fiber is soft such that a "spin" is permanently impressed on the fiber. See also US patent 5,418,881.

The '047 patent teaches a technique for applying the torque that involves oscillating a guide roller back and forth. This technique works very well, having facilitated manufacture of large quantities of very low PMD fiber. However, our recent work directed towards fiber drawing at still higher draw speeds than utilized up to now has led to the recognition that it would at best be difficult to use the prior art technique at the higher draw speeds, since the guide roller would have to be oscillated back and forth at impractically high rates. It would thus be highly desirable to have available a method of making optical fiber with alternating frozen-in spin (and thus low PMD) that is capable of use at even higher draw speeds than the prior art technique. This application discloses such a method.

### Brief Description of the Drawings

FIGs. 1, 2 and 3a)-3d) illustrate the geometry of an exemplary member for use in the inventive process; and
FIG. 4 schematically shows exemplary apparatus for the practice of the invention.

### The Invention

The invention is as defined by the claims. The inventive method of making optical fiber comprises the steps of providing an optical fiber preform, heating at least a portion of the preform, and drawing the optical fiber from the heated preform such that a spin is impressed on the fiber. The drawing step is carried out with the preform maintained rotationally stationary, and comprises applying a torque to the fiber whereby the fiber undergoes rotation around the longitudinal axis of the fiber, such that the spin is impressed on the fiber as it is drawn from the preform. The torque is applied such that the impressed spin is alternately clockwise and counterclockwise. The torque is achieved by the method step d) defined in claim 1.

Significantly, applying the torque to the fiber comprises providing a member that has a surface and an axis and is capable of rotation around the axis, and contacting the surface of the member with the fiber that is being drawn from the preform. The member is selected such that, during a first portion of a complete revolution of the member, a direction normal to said surface of the member forms with said axis an angle φ that is less than 90°, and also forms, during a second portion of said complete revolution of the member, with said axis an angle φ that is more than 90°.

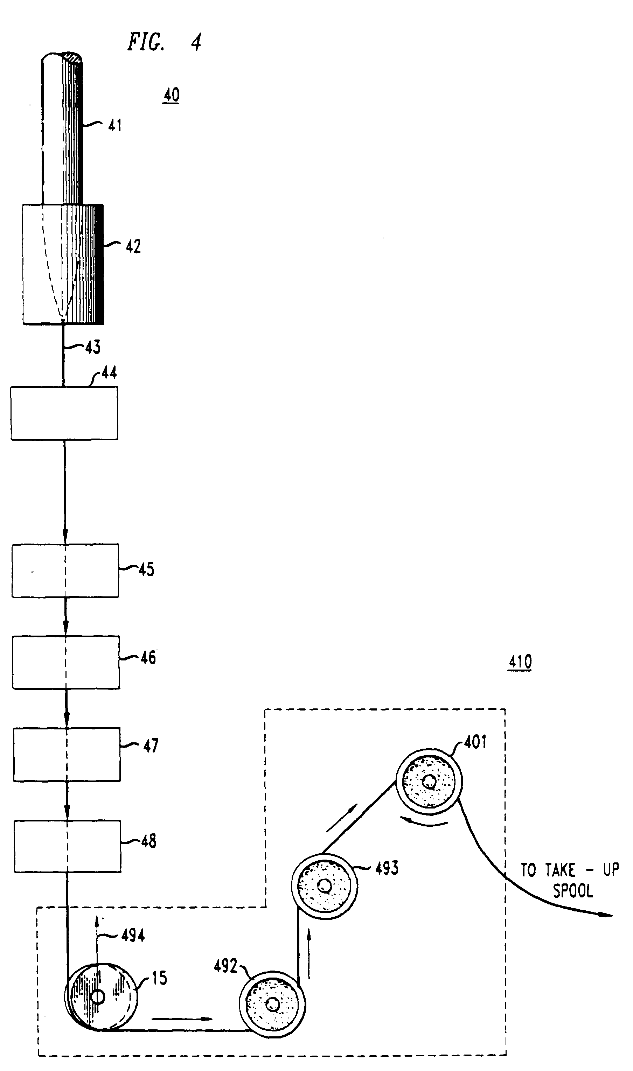

As was stated above, the prior art method involves, inter alia, actively oscillating a guide roller back and forth through an angle 2θ (see FIG. 4 of the '047 patent). On the other hand, the method according to the instant invention utilizes a stationary roller (the "member") of a geometry selected such that the rotating member automatically applies alternately clockwise and counterclockwise torque to the fiber, as the fiber is drawn from the preform and contacts the surface of the member. Spin spatial frequencies in excess of 10 spins/m are readily obtainable. It is emphasized that said angular relationship between the axis of the member and the normal to the surface of the member is met at any given point on the surface of the rotating member (e.g., at the point that is closest to the hot zone; see FIG. 4), with said point being stationary with respect to the draw tower. The point thus traces a closed path on the surface of the rotating member, and the direction normal to the surface at the point indicates the varying tilt of the surface at the point as the member rotates.

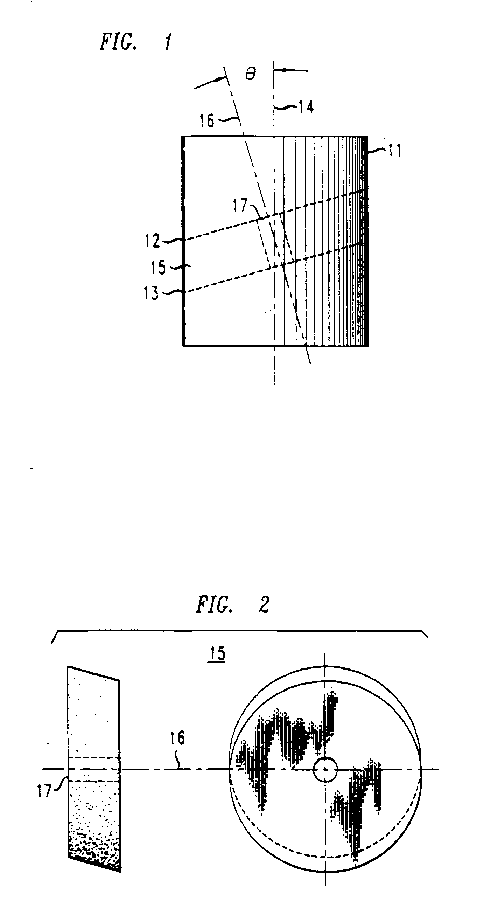

The geometry of an exemplary member will now be described. Consider a solid cylinder (e.g., aluminum round stock) of diameter D, and further consider making 2 parallel cuts through the cylinder, the cuts being inclined with respect to the axis of the cylinder such that a direction normal to one of the cuts forms an angle θ (θ ≠ 0) with the cylinder axis. See FIG. 1, wherein numerals 11-16 refer, respectively, to the cylinder, the two parallel "cuts", the cylinder axis, the body formed by the two cuts, and the direction normal to one of the parallel cut surfaces.

Next, consider placing the thus formed body 15 on a surface (e.g., the work table of a drill press) and drilling a hole (17) through the body in the direction normal to the surface such that the axis of the hole intersects center line 14 in the plane midway between parallel surfaces 12 and 13. The resulting body can, at least in principle, serve as the above referred-to "member". Hole 17 can be dimensioned to accept the axis on which the member will rotate.

The above description of the geometry of an exemplary member in terms of a process of making the member is for tutorial purposes only, and is not meant to imply that the practice of the inventive method necessarily requires a rotatable member that was made as described.

FIG. 2 schematically shows body 15 in plan view and side view. It will be understood that the two plane surfaces of 15 have elliptical shape.

FIG. 4 depicts exemplary fiber drawing apparatus 40 according to the invention. Numerals 41-48 refer, respectively, to fiber preform, furnace, fiber, diameter monitor, coating applicator, coating concentricity monitor, curing station and coating diameter monitor. A set of rollers in portion 410 of the apparatus includes capstan 401 and serves, inter alia, to guide the fiber to a take-up spool. Capstan 401 provides the draw force and determines the draw speed, with rollers 15, 492 and 493 being driven by the fiber. Numeral 15 designates the above-described member.

It will be noted that member 15 is positioned such that it receives the fiber on the draw axis, and inter alia serves to direct the fiber away from the draw axis. Those skilled in the art will appreciate that FIG. 4 inter alia does not show optional guide rollers that may, for instance, be positioned a short distance upstream from member 15 (e.g., between 48 and 15) and serve to minimize transmission into the monitoring apparatus (e.g., 48) of the back-and-forth fiber movement parallel to the axis of member 15.

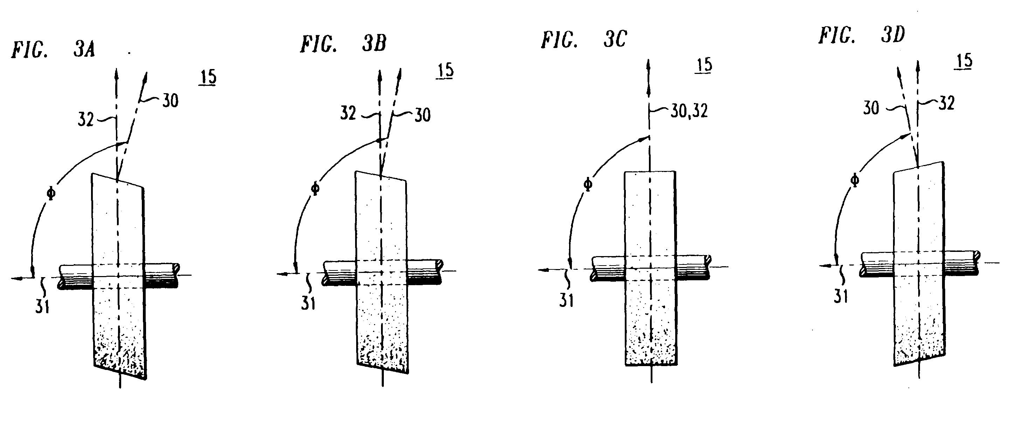

Member 15 is caused to rotate as the fiber passes around a segment of its circumference, with the rotation rate being determined by the draw speed and the diameter D. The surface of the member is not generally parallel with the axis of rotation of the member. Indeed, considering a location that is fixed with regard to the draw tower (e.g., the point on the surface of 15 that lies on a line 494 that is parallel to the draw direction and intersects the axis of 15), the normal to the surface at that point moves to one side of 494 until it reaches maximum departure θ, reverses direction and moves to the other side of 494 until it reaches maximum departure -θ, whereupon it again reverses direction, etc. This is illustrated in FIGs. 3a-3d, which show initial position (3a), as well as positions approximately 45° (3b), 90° (3c), and 135° (3d) from the initial position. Numeral 30 refers to the normal to the surface, numeral 31 to the direction parallel to the axis of the member, and 32 to a direction perpendicular to 31 (exemplarily to direction 494). As can be seen, angle φ varies between 90-θ and 90 + θ, where φ is the angle between directions 30 and 31.

The tilted surface of the rotating member applies a torque to the fiber which causes the fiber to roll, which in turn imparts twist to the fiber. The twist propagates up the fiber into the hot zone where the fiber is plastically deformed. Within a very short time the fiber has cooled sufficiently such that the deformation is frozen in. Spin is thus impressed on the fiber, substantially as described in the '047 patent.

As the member continues to rotate, the surface tilt that the fiber experiences changes, goes through zero, and then goes in the opposite direction. This causes the fiber to twist in the other direction, and results in frozen-in spin of the opposite sense. This oscillation between clockwise and counterclockwise twist can greatly reduce or even eliminate mechanical twist from the fiber and is an important aspect of the invention.

Those skilled in the art will appreciate that members according to the invention are not limited to those that exhibit one complete cycle of surface tilt in one complete revolution of the member. At least in principle it is possible to provide members that exhibit a plurality of complete cycles of surface tilt in one complete revolution of the member. However, such members are more difficult to make and are currently not preferred.

Our experience indicates that the diameter of the member desirably is selected by taking into account the height of the draw tower that is to be used, with a taller tower typically requiring a larger diameter. This is believed to be associated with the fact that the fiber acts like a spring as it twists, and some amount of twisting at the member is required before the torque in the hot zone is sufficient to cause twist of the viscous glass and spin is impressed on the fiber. The taller the draw tower the more twists are required in the fiber before twisting occurs in the hot zone. A too small circumference can result in cancellation of the twists in the fiber before they reach the hot zone. By way of example, we have found that a 15cm (6 inch) diameter member worked well on towers in the 7.62-9.14m (25-30) foot range but not on a 21.33m (70 foot) tower. We believe that a 30cm (12 inch) diameter member is likely to be satisfactory on a 21.33m (70 foot) tower, assuming a moderate draw speed. For higher draw speeds (e.g., 20 m/s) a member of even larger diameter (e.g., 46cm (18 inches)) may be preferable. Those skilled in the art will undoubtedly be readily able to determine a satisfactory member diameter for use with a given draw tower and draw speed. Frequently it will be found desirable to select a member of diameter ≳ 3% of the distance from the member to the hot zone. The maximum diameter of the member will typically be dictated by considerations of available space at the foot of the draw tower.

The angle of maximum surface tilt (θ) is a further parameter of significance, with a larger angle being generally associated with more spins/meter. We have used members with θ up to 15°, resulting in about 25-30 spins/m. As can be readily determined, such large numbers of spin/m are associated with significant rotation rates of the fiber. For instance, for a draw speed of 5 m/s, 30 spins/m translate into fiber rotation rates of about 9000 rpm. Very high fiber rotation rates may lead to, e.g., problems in applying the coating to the fiber, and are currently not preferred. Typically, maximum surface tilt will be in the range 3-15°, corresponding to the angle φ maximally varying between 75 and 105°, and minimally varying between 87 and 93°. Conditions will typically be selected such that the resulting fiber has 1 spin/m or more, preferably 4 spins/m or more.

The surface of the member is in contact with the coated fiber, and we have found that it is typically desirable if the contact surface of the member is polished. This is particularly true for members with relatively small maximum surface tilt, e.g., for θ ≲ 5°.

### Example:

Fiber was drawn from a specially prepared preform having an off-axis longitudinal bore on a 8.84m (29 ft) draw tower at a rate of 3 m/s. A member as described above was placed substantially as shown in FIG. 4. The member had 20cm (8 inch) diameter, with 15° maximum surface tilt. After completion of fiber drawing the fiber was inspected with a light microscope. The inspection was facilitated by the presence of a visible feature in the fiber that was due to the collapsed bore. The inspection showed the presence of about 28 spins/m in the fiber.

## Claims

1. Method of making an optical fiber (43) comprising
a) providing an optical fiber preform (41);
b) heating at least a portion of said preform such that a molten zone results;
c) drawing, while keeping the preform rotationally stationary, the optical fiber from the heated, rotationally stationary preform such that the fiber contacts a peripheral surface of a member (15) such that an alternately clockwise and counterclockwise spin is impressed on the fiber, with the member being caused to rotate about an axis by the contact with the fiber being drawn from the preform;
CHARACTERIZED IN THAT
d) the member further comprises two parallel, planar elliptical surfaces (12, 13) that are perpendicular to said axis, with the peripheral surface tilted with respect to the axis such that the fiber is caused to move back and forth on the peripheral surface as the member is rotated about the axis, with the axis being stationary with respect to the molten zone.

2. Method of claim 1, wherein the member has a diameter D, with D selected to be greater than 3% of the distance from the member to said molten zone.

3. Method of claim 1, wherein the member is selected such that an angle φ at least varies between 87° and 93°, and at most varies between 75° and 105°, where φ is the angle between the axis and a direction (30) normal to the peripheral surface.

4. Method of claim 2, wherein D and a fiber draw speed are selected such that the fiber drawn from the preform has at least 1 spin/m.

5. Method of claim 4, wherein in D and the draw speed are selected such that the fiber has at least 4 spins/m.

## Patentansprüche

1. Verfahren zur Herstellung einer Lichtleitfaser (43) mit den folgenden Schritten:
a) Bereitstellen eines Lichtleitfaser-Preforms (41);
b) Erhitzen mindestens eines Teils des Preforms dergestalt, daß sich eine geschmolzene Zone ergibt;
c) Ziehen der Lichtleitfaser aus dem erhitzten Preform, das dabei hinsichtlich Drehung stationär gehalten wird, dergestalt, daß die Faser eine Peripheriefläche eines Glieds (15) kontaktiert, so daß der Faser abwechselnd im Uhrzeigersinn und entgegen dem Uhrzeigersinn eine Verdrehung auferlegt wird, wobei durch den Kontakt mit der aus dem Preform gezogenen Faser eine Drehung des Glieds um eine Achse bewirkt wird;
dadurch gekennzeichnet, daß
d) das Glied weiterhin zwei zu der Achse senkrechte parallele, planare elliptische Flächen (12, 13) aufweist, wobei die Peripheriefläche in bezug auf die Achse so geneigt ist, daß das eine Vorwärts- und Rückwärtsbewegung der Faser auf der Peripheriefläche bewirkt, während das Glied um die Achse gedreht wird, wobei die Achse in bezug auf die geschmolzene Zone stationär ist.

2. Verfahren nach Anspruch 1, wobei das Glied einen Durchmesser D aufweist, wobei D größer als 3% des Abstands zwischen dem Glied und der geschmolzenen Zone gewählt wird.

3. Verfahren nach Anspruch 1, wobei das Glied so gewählt wird, daß sich ein Winkel φ mindestens zwischen 87° und 93° und höchstens zwischen 75° und 105° ändert, wobei φ der Winkel zwischen der Achse und einer zu der Peripheriefläche normalen Richtung (30) ist.

4. Verfahren nach Anspruch 2, wobei D und die Faserziehgeschwindigkeit so gewählt werden, daß die aus dem Preform gezogene Faser mindestens 1 Verdrehung/m aufweist.

5. Verfahren nach Anspruch 4, wobei D und die Ziehgeschwindigkeit so gewählt werden, daß die Faser mindestens 4 Verdrehungen/m aufweist.

## Revendications

1. Procédé de fabrication d'une fibre optique (43) comprenant
a) la fourniture d'une préforme de fibre optique (41) ;
b) le chauffage d'au moins une partie de ladite préforme de manière à produire une zone fondue ;
c) le tirage, tout en maintenant la préforme fixe en rotation, de la fibre optique à partir de la préforme chauffée, fixe en rotation, de telle sorte que la fibre entre en contact avec une surface périphérique d'un élément (15) de telle sorte qu'une rotation alternativement horaire et anti-horaire soit appliquée à la fibre, étant fait en sorte que l'élément tourne autour d'un axe par le contact avec la fibre en train d'être tirée à partir de la préforme ;
CARACTERISE EN CE QUE
d) l'élément comprend en outre deux surfaces elliptiques planes, parallèles (12, 13) qui sont perpendiculaires audit axe, la surface périphérique étant inclinée par rapport à l'axe de telle sorte que la fibre soit obligée de se déplacer d'avant en arrière sur la surface périphérique au fur et à mesure que l'élément tourne autour de l'axe, l'axe étant fixe par rapport à la zone fondue.

2. Procédé selon la revendication 1, dans lequel l'élément a un diamètre D, D étant sélectionné pour être supérieur à 3% de la distance depuis l'élément jusqu'à ladite zone fondue.

3. Procédé selon la revendication 1, dans lequel l'élément est sélectionné de telle sorte qu'un angle φ varie au moins entre 87° et 93°, et varie au plus entre 75° et 105°, où φ est l'angle entre l'axe et un sens (30) perpendiculaire à la surface périphérique.

4. Procédé selon la revendication 2, où D et une vitesse de tirage de fibre sont sélectionnés de telle sorte que la fibre tirée à partir de la préforme ait au moins 1 rotation/m.

5. Procédé selon la revendication 4, où D et la vitesse de tirage sont sélectionnés de telle sorte que la fibre ait au moins 4 rotations/m.
